# EUROPÄISCHE PATENTSCHRIFT

(11) **EP 2 461 991 B1**
(45) Veröffentlichungstag und Bekanntmachung des Hinweises auf die Patenterteilung: **26.10.2016**
(21) Anmeldenummer: 10731531.9
(22) Anmeldetag: 14.07.2010
(51) Int. Cl.: B60H 1/00

(54) **VERFAHREN UND VORRICHTUNG ZUM TEMPERIEREN EINES FAHRZEUGINNENRAUMES**
METHOD AND DEVICE FOR TEMPERING A VEHICLE PARTMENT
PROCÉDÉ ET DISPOSITIF DE CONDITIONNEMENT THERMIQUE UN HABITACLE DE VÉHICULE AUTOMOBILE

(30) Priorität: 07.08.2009 DE 102009028328
(43) Veröffentlichungstag der Anmeldung: 13.06.2012
(73) Patentinhaber: Robert Bosch GmbH, 70442 Stuttgart (DE)
(72) Erfinder: NORDEN, Roland, 71706 Markgroeningen (DE)
(86) Internationale Anmeldenummer: PCT/EP2010/060115
(87) Internationale Veröffentlichungsnummer: WO 2011/015431

(56) Entgegenhaltungen:
- DE-A1- 19 534 427
- DE-A1- 19 609 048
- DE-C1- 19 829 143
- GB-A- 2 446 261
- US-A- 5 285 963
- US-A1- 2003 201 097

## Beschreibung

Die vorliegende Erfindung betrifft ein Verfahren zum Temperieren eines Fahrzeuginnenraumes und/oder einer Batterie gemäß dem Oberbegriff des Anspruches 1 und ein Temperierungssystem für einen Fahrzeuginnenraum und/oder eine Batterie gemäß dem Oberbegriff des Anspruches 7.

### Stand der Technik

In zunehmenden Maße werden von der Kraftfahrzeugindustrie Elektrofahrzeuge und Hybridfahrzeuge hergestellt oder entwickelt, um den Verbrauch von fossilen Brennstoffen bei der Benutzung von Kraftfahrzeugen zu senken. Elektrofahrzeuge werden ausschließlich von einem Elektromotor angetrieben und Hybridfahrzeuge werden von einem Verbrennungs- und Elektromotor angetrieben. Hybridfahrzeuge und Elektrofahrzeuge verfügen hierbei über eine Batterie bzw. Traktionsbatterie zum Antrieb des Kraftfahrzeuges. Dabei wird die Batterie während eines Stillstands des Kraftfahrzeuges von einem externen Stromnetz, insbesondere ein öffentliches, Stromnetz aufgeladen. Hierzu verfügt das Kraftfahrzeug im Allgemeinen über einen Stecker, mittels dem das Kraftfahrzeug mit dem externen Stromnetz verbunden und dadurch die Batterie zum Antrieb des Kraftfahrzeuges aufgeladen wird. Die in der Batterie speicherbare elektrische Energie ist begrenzt und schränkt die Reichweite ein, mittels der das Kraftfahrzeug durch elektrische Energie angetrieben oder fortbewegt werden kann.

Das Hybrid- oder Elektrofahrzeug benötigt neben dem Antrieb zur Fortbewegung des Kraftfahrzeuges auch Energie zur Temperierung des Fahrzeuginnenraumes und zur Temperierung der Batterie. Die Temperierung, d. h. das Erwärmen oder Kühlen, des Fahrzeuginnenraumes ist erforderlich, um für die Fahrzeuginsassen im Fahrzeuginnenraum eine komfortables Temperaturniveau beispielsweise im Bereich von 21°C zu erhalten. Hierzu ist der Fahrzeuginnenraum im Winter zu erwärmen und im Sommer zu kühlen. Ferner benötigen die Batterien als elektrochemische Energiespeicher eine bestimmte Betriebstemperatur im Bereich zwischen 0°C und 40°C. Die Batterien geben dabei beim Laden oder Entladen Abwärme ab, so dass auch dadurch eine Temperierung erforderlich ist. Außerdem ist beispielsweise im Winter bei sehr niedrigen Temperaturen, z. B. bei -10°C, ein Erwärmen der Batterien vor einer Entladung erforderlich. Bei einem Fahrtantritt mit dem Elektro- oder dem Hybridfahrzeug muss deshalb von der Batterie nicht nur elektrische Energie zum Antrieb des Kraftfahrzeuges, sondern auch zum Temperieren der Batterie und/oder des Fahrzeuginnenraumes entnommen werden. Diese zusätzliche entnommene elektrische Energie vermindert damit die zum Antrieb des Kraftfahrzeuges zur Verfügung stehende elektrische Energie, so dass dadurch die Reichweite des Kraftfahrzeuges verringert wird, welche mittels elektrischer Energie aus der Batterie zurückgelegt werden kann.

Die DE 196 09 048 C2 zeigt eine Heizungs- und Klimatisierungseinrichtung, insbesondere für ein Elektro- oder Hybridfahrzeug. Die Heizungs- und Klimatisierungseinrichtung verfügt über einen Kältekreis mit einem Verdampfer, einem Kondensator und einem Verdichter sowie über eine Heizeinrichtung, mittels der insbesondere der Fahrzeuginnenraum temperiert wird.

GB 2 446 261 offenbart ein Verfahren gemäß dem Oberbegriff des Anspruchs 1.

### Offenbarung der Erfindung

### Vorteile der Erfindung

Erfindungsgemäßes Verfahren zum Temperieren eines Fahrzeuginnenraumes und/oder einer Batterie eines Elektro- oder Hybridfahrzeug mit den Schritten: Erfassen einer Ist-Temperatur des Fahrzeuginnenraumes und/oder der Batterie, Vergleichen der Ist-Temperatur mit einer Soll-Temperatur des Fahrzeuginnenraumes und/oder der Batterie, Temperieren des Fahrzeuginnenraumes und/oder der Batterie bei einer Abweichung der Ist-Temperatur von der Soll-Temperatur, wobei der Fahrzeuginnenraum und/oder die Batterie vor Fahrantritt mittels elektrischer Energie aus einem externen Stromnetz temperiert wird und die elektrische Energie zum Temperieren während des Temperierens dem externen Stromnetz entzogen wird. Das Hybridfahrzeug ist vorzugsweise in Plug-In-Hybridfahrzeug.

Die elektrische Energie zum Temperieren des Fahrzeuginnenraumes und/oder der Batterie wird somit nicht der Batterie zum Antrieb des Elektro- oder Hybridfahrzeuges entnommen, sondern dem externen, öffentlichen Stromnetz. Damit kann der Fahrzeuginnenraum aus dem öffentlichen Stromnetz im Winter erwärmt und im Sommer gekühlt werden und außerdem die Batterie auf die erforderliche Betriebstemperatur im Bereich zwischen 0°C und 40°C temperiert werden, so dass zum Temperieren des Fahrzeuginnenraumes und der Batterie während des Beginns der Fahrt keine elektrische Energie aus der Batterie entnommen werden muss. Damit kann die Reichweite erhöht werden, die mittels elektrischer Energie aus der Batterie von dem Elektro- oder Hybridfahrzeug zurückgelegt werden kann. Das Elektro- oder Hybridfahrzeug ist hierzu mittels eines Steckers mit dem externen Stromnetz verbunden, so dass der elektrische Strom durch diese Leitung aus dem externen Stromnetz zu wenigstens einer Temperierungseinrichtung geleitet werden kann und unmittelbar diese aus dem externen Stromnetz stammende elektrische Energie zum Temperieren des Fahrzeuginnenraumes und/oder der Batterie verwendet wird.

Insbesondere wird der Fahrzeuginnenraum und/oder die Batterie vor Fahrantritt mittels elektrischer Energie ausschließlich aus dem externen Stromnetz temperiert und/oder die, vorzugsweise elektrische, Energie zum Temperieren wurde nicht in einem Energiespeicher, insbesondere einer Batterie, des Elektro- oder Hybridfahrzeuges gespeichert.

Gemäß der Erfindung wird ein bevorstehender Fahrtantritt mit dem Elektro- oder Hybridfahrzeug ermittelt und, vorzugsweise während einer vorgegebenen Zeitspanne, vor dem Fahrtantritt der Fahrzeuginnenraum und/oder die Batterie temperiert wird. Das Ermitteln des bevorstehenden Fahrtantrittes ist erforderlich, damit der Fahrzeuginnenraum und/oder die Batterie nicht ständig temperiert wird während der Zeit, bei der das Elektro- oder Hybridfahrzeug an das externe Stromnetz angeschlossen ist. Das Temperieren des Fahrzeuginnenraumes und/oder der Batterie soll nur dann ausgeführt werden, wenn eine Fahrt mit dem Elektro- oder Hybridfahrzeug vorgesehen ist.

Vorzugsweise wird der bevorstehende Fahrtantritt vom Benutzer eingegeben.

In einer Variante wird der bevorstehende Fahrtantritt mittels einer Fernsteuerung und/oder einem Timer und/oder einem mobilen tragbaren Gerät, insbesondere ein Handy oder ein Blackberry oder ein Laptop, vom Benutzer eingegeben. Die Fernsteuerung ist dabei eine mobile und tragbare Fernsteuerung, die in der Nähe des Hybrid- oder Elektrofahrzeuges mittels einer Funkverbindung mit dem Elektro- oder Hybridfahrzeug in Kontakt bzw. Datenaustausch treten kann. Der Benutzer muss lediglich an einer Fernsteuerung einen bevorstehenden Fahrtantritt eingeben, so dass anschließend automatisch der Fahrzeuginnenraum und/oder die Batterie temperiert wird. Dabei kann auch ein Zeitpunkt des Fahrtantrittes eingegeben werden und anschließend wird in einer ausreichenden Zeitspanne vor dem Fahrtantritt das Temperieren des Fahrzeuginnenraumes und/oder der Batterie durchgeführt. Mittels eines Timers kann am Elektro- oder Hybridfahrzeug der Zeitpunkt eines Fahrtantrittes in der Zukunft eingegeben werden.

Zweckmäßig wird der bevorstehende Fahrtantritt mittels einer Koppelung mit Wetterinformationen und/oder mittels einer Koppelung mit dem Internet ermittelt. Durch entsprechende Datenschnittstellen, insbesondere mit dem Internet, kann das Elektro- oder Hybridfahrzeug Informationen zum Wetter erhalten. Diese Informationen zum voraussichtlichen Wetter im Bereich des Elektro- oder Hybridfahrzeuges fließen dann in die Steuerung und/oder Regelung der Temperierung des Fahrzeuginnenraumes und/oder Batterie ein. Bei einer Kopplung mit dem Internet können Informationen aus dem Internet zu dem Elektro- oder Hybridfahrzeug, insbesondere einer Steuerungseinrichtung des Elektro- oder Hybridfahrzeuges, übermittelt werden. Beispielsweise am Laptop oder am Handy eingegebene Daten werden somit über die Schnittstelle Internet zu dem Elektro- oder Hybridfahrzeug übertragen.

In einer weiteren Ausführungsform wird der bevorstehende Fahrtantritt mittels einer Koppelung mit einem Garagentüröffner ermittelt. Der Garagentüröffner wird somit als Indikator für einen bevorstehenden Fahrtantritt genutzt. Bei einer Öffnung einer Garagentür wird eine Temperierung des Fahrzeuginnenraumes und/oder der Batterie ausgeführt.

Der bevorstehende Fahrtantritt wird aufgrund einer Temperierungsnutzungshistorie und/oder einer Nutzungshistorie des Elektro- oder Hybridfahrzeuges ermittelt. Die Temperierungsnutzungshistorie stellt den Temperierungsverlauf und den Nutzungsverlauf des Elektro- oder Hybridfahrzeuges in der Vergangenheit dar. Mittels einer lernenden Software in der Steuerungseinrichtung kann diese Temperierungsnutzungshistorie des Elektro- oder Hybridfahrzeuges ausgewertet werden und hieraus ein bevorstehender Fahrtantritt ermittelt werden. Fährt beispielsweise ein Benutzer des Elektro- oder Hybridfahrzeuges von montags bis freitags morgens um 8 Uhr in die Arbeit, so kann ein derartiger bevorstehender Fahrtantritt aus der Temperierungsnutzungshysterie des Elektro- oder Hybridfahrzeuges ermittelt werden und dadurch vor dem bevorstehenden ermittelten Fahrtantritt die Temperierung eingeleitet werden. In diese Temperierung kann dabei auch eine Information zum voraussichtlichen Wetter mit einfließen und berücksichtigt werden.

In einer weiteren Ausgestaltung wird die Ist-Temperatur des Fahrzeuginnenraumes und/oder der Batterie mittels wenigstens einen Temperatursensors erfasst.

In einer zusätzlichen Ausführungsform ist in einer Steuerungseinrichtung des Elektro- oder Hybridfahrzeuges die Soll-Temperatur des Fahrzeuginnenraumes und/oder der Batterie hinterlegt oder gespeichert. Dabei kann die Soll-Temperatur des Fahrzeuginnenraumes und/oder der Batterie auch von weiteren Parametern abhängen. Als Parameter kommen hierbei die Außentemperatur, die Sonneneinstrahlung oder die Art der Nutzung der Batterie, d. h. ein Laden oder ein Entladen und/oder welche Leistung der Batterie entnommen wird oder mit welcher Leistung die Batterie aufgeladen wird.

Erfindungsgemäßes Temperierungssystem für eine Fahrzeuginnenraum und/oder einer Batterie eines Elektro- oder Hybridfahrzeuges, umfassend: wenigstens einen Sensor zur Erfassung einer Ist-Temperatur des Fahrzeuginnenraumes und/oder der Batterie, eine Steuerungseinrichtung, wenigstens eine Temperierungseinrichtung zur Temperierung des Fahrzeuginnenraumes und/oder der Batterie, weiter wird ein Verfahren zum Temperierung des Fahrzeugennenraumes und/oder der Batterie in dieser Schutzrechtsanmeldung beschrieben.

In einer weiteren Ausgestaltung ist die Temperierungseinrichtung ein Kältekreis, umfassend einen Verdampfer, einen Verdichter und einen Kondensator und/oder die Temperierungseinrichtung ist eine, vorzugsweise elektrische, Heizeinrichtung.

In einer ergänzenden Variante ist der Fahrzeuginnenraum und/oder die Batterie mittelbar mittels eines Fluides und einem Wärmetauscher temperierbar, so dass die Wärmeenergie oder Kälteenergie von dem Verdampfer und/oder Kondensator und/oder der Heizeinrichtung auf das Fluid und anschließend auf den Fahrzeuginnenraum, insbesondere die Luft in dem Fahrzeuginnenraum und/oder die Batterie, übertragbar ist. Der Fahrzeuginnenraum und/oder die Batterie werden somit von der Temperierungseinrichtung indirekt erwärmt. Die Wärme- oder Kälteenergie wird somit von der Temperierungseinrichtung zunächst auf ein Fluid übertragen und dieses Fluid durch den Wärmetauscher geleitet. Außerdem wird durch den Wärmetauscher ein weiteres Fluid, insbesondere Luft geleitet, und dieses zweite Fluid in unmittelbaren Kontakt mit dem Fahrzeuginnenraum und/oder der Batterie gebracht. Hierzu wird beispielsweise durch den Wärmetauscher Luft geleitet, welche in den Fahrzeuginnenraum eingeleitet wird und/oder Luft geleitet, welche zu den Batterien geleitet wird, die in einem Batteriegehäuse angeordnet sind.

Die Batterie umfasst vorzugsweise mehrere Batterien, die zu einem Batteriemoduls zusammengefasst sind. Ein Batteriemodul mit vielen Batterien wird hierbei auch als die Batterie aufgefasst.

In eine weiteren Variante umfasst das Temperierungssystem eine Datenschnittstelle zur Übertragung von Daten bezüglich eines bevorstehenden Fahrtantritts. Die Datenschnittstelle ist dabei eine Schnittstelle zur Übertragung von Daten mittels Funk oder zur Übertragung von Daten mittels einer elektrischen Leitung. Bei einer Übertragung der Daten mittels einer elektrischen Leitung kann die elektrische Leitung in die Leitung zum Anschließen des Elektro- oder Hybridfahrzeuges an das externe Stromnetz integriert sein oder die Daten können auf die Leitungen zur Übertragung des Stromes von dem externen

Stromnetz zu dem Elektro- oder Hybridfahrzeug aufmoduliert werden. Bei einer Datenschnittstelle mittels Funkübertragung verfügt das Elektrohybridfahrzeug an der Datenschnittstelle über einen entsprechenden Sender und Empfänger.

Die Steuerungseinheit umfasst einen Computer und einen Datenspeicher zur Speicherung der Nutzungshistorie.

In eine weiteren Ausgestaltung liegt die Soll-Temperatur der Batterie zwischen 10°C und 40°C und die Soll-Temperatur des Fahrzeuginnenraumes liegt zwischen 15°C und 25°C oder die Soll-Temperatur des Fahrzeuginnenraumes ist vom Benutzer mittels einer Eingabeeinheit eingebbar. Die Soll-Temperatur der Batterie ist dabei im Allgemeinen nicht fest vorgegeben, sondern wird aufgrund weiterer Parameter, z. B. der Außentemperatur der Sonneneinstrahlung oder der Grad oder der Art der Nutzung der Batterie, ermittelt. Dies gilt analog für die Soll-Temperatur des Fahrzeuginnenraumes, die auch vom Benutzer eingegeben werden kann.

In eine weiteren Ausgestaltung ist die Batterie eine Lithiumionenbatterie und/oder dient die Batterie als Traktionsbatterie zum Antrieb des Elektro- oder Hybridfahrzeuges. Die Batterie des Elektro- oder Hybridfahrzeuges dient während der Fahrt zum Antrieb des Elektro- oder Hybridfahrzeuges und außerdem zum Temperieren des Fahrzeuginnenraumes und/oder der Batterie. Hierbei wird im Allgemeinen der Batterie elektrische Energie zum Temperieren des Fahrzeuginnenraumes und/oder der Batterie während der Fahrt erst dann entnommen, wenn das Elektro- oder Hybridfahrzeug bereits einige Zeit fährt und einige Zeit nicht mehr mit dem externen Stromnetz verbunden ist, so dass die Vortemperierung des Fahrzeuginnenraumes und/oder der Batterie vor Fahrtantritt nicht mehr ausreichend ist für eine ausreichende Temperierung des Fahrzeuginnenraumes und/oder der Batterie.

Das Temperieren des Fahrzeuginnenraumes und/oder der Batterie ist das Erwärmen und/oder Kühlen des Fahrzeuginnenraumes und/oder der Batterie.

Ein erfindungsgemäßes Kraftfahrzeug umfasst ein in dieser Schutzrechtsanmeldung beschriebenes Temperierungssystem und/oder von dem Kraftfahrzeug ist ein in dieser Schutzrechtsanmeldung beschriebenes Verfahren ausführbar.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen schematisiertes Systembild eines Temperierungssystems,
- Fig. 2: ein Systembild eines Kältekreises und

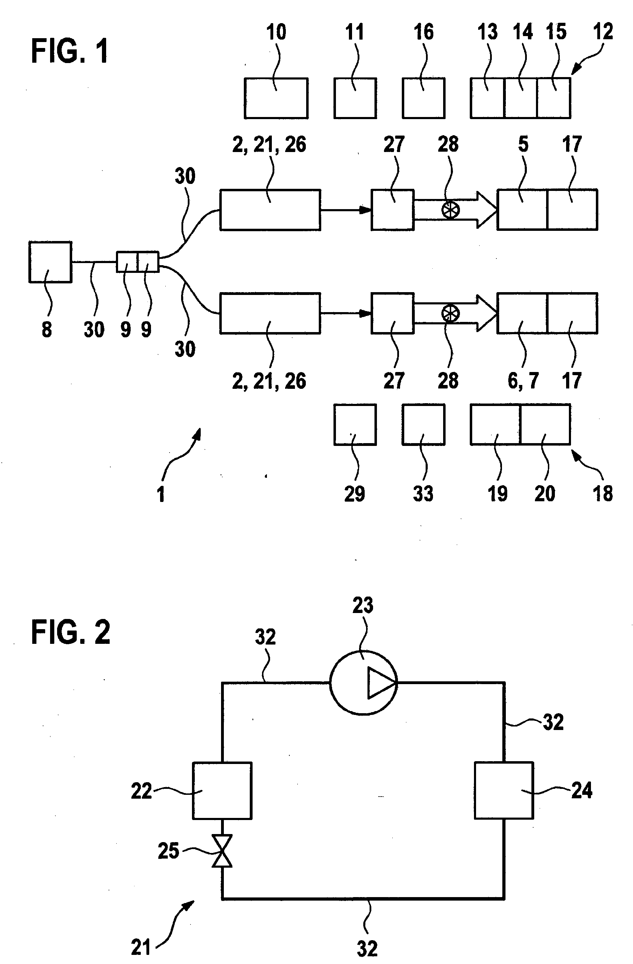

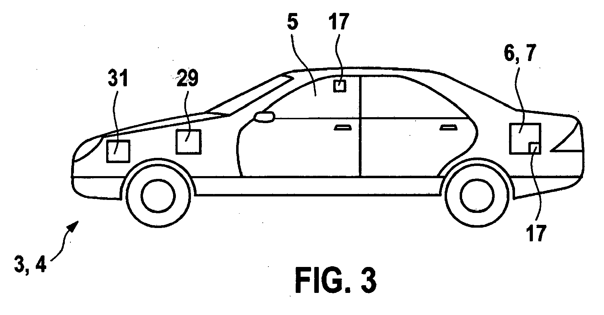

- Fig. 2: eine Ansicht eines Elektro- und Hybridfahrzeuges.

### Ausführungsformen der Erfindung

In Fig. 1 ist ein schematisiertes Systembild eines Temperierungssystems 1 dargestellt. Das Temperierungssystem 1 für ein Elektrofahrzeug 3 oder ein Hybridfahrzeug 4 dient dazu, einen Fahrzeuginnenraum 5 und/oder eine Batterie 6 des Elektro- oder Hybridfahrzeuges, 3, 4 zu temperieren. Das Temperieren ist dabei das Kühlen oder das Erwärmen des Fahrzeuginnenraumes 5 und/oder der Batterie 6 des Elektro- oder Hybridfahrzeuges 3, 4. Unter dem Fahrzeuginnenraum 5 wird dabei beispielsweise die Luft des Fahrzeuginnenraumes 5 verstanden, die mittels einer Kraftfahrzeugklimaanlage temperiert wird. Ferner wird unter dem Fahrzeuginnenraum auch eine Heckscheibe oder ein Fahrzeugsitz im Inneren des Fahrzeuginnenraumes 5 verstanden. Eine Heckscheibe des Elektro- oder Hybridfahrzeuges wird beispielsweise mittels einer elektrischen Heckscheibenheizung erwärmt und ein Fahrzeugsitz des Kraftfahrzeuges wird beispielsweise mittels einer elektrischen Sitzheizung erwärmt.

Um den Insassen des Elektro- oder Hybridfahrzeuges 3, 4 eine angenehme Temperatur im Fahrzeuginnenraum 5, z.B. im Bereich von 21°C zu ermöglichen, ist eine Temperierung des Fahrzeuginnenraumes 5 erforderlich. Die Batterien 6 als Lithiumionenbatterien 7 dienen dabei im Wesentlichen zum Antrieb des Elektro- oder Hybridfahrzeuges 3, 4. Das Elektrofahrzeug 3 wird mittels elektrischer Energie aus der Batterie 6 durch einen Elektromotor 31 angetrieben und das Hybridfahrzeug 4 mittels elektrischer Energie aus der Batterie 6 sowie durch eines nicht dargestellten Verbrennungsmotors. Dabei ist das Hybridfahrzeug 4 ein sogenanntes Plug-In-Hybridfahrzeug 4, bei dem während des Stillstandes des Hybridfahrzeuges 4 die Batterie 6 aus einem externen, öffentlichen Stromnetz 8 aufgeladen wird und während der Fahrt die Batterie 6 entladen wird zum Antrieb des Elektromotors 31 zur Fortbewegung des Hybrid- oder Elektrofahrzeuges 3, 4.

Das Temperierungssystem 1 umfasst als Temperierungseinrichtung 2 einen Kältekreis 21 und eine elektrische Heizeinrichtung 26. Der Kältekreis 21 umfasst dabei einen Verdampfer 22, einen Verdichter 23, einen Kondensator 24 und ein Expansionsventil 25 (Fig. 2). Der Verdampfer 22, der Verdichter 23 und der Kondensator 24 sind dabei mittels einer Kältemittelleitung 32 miteinander verbunden. Die Heizeinrichtung 26 und der Kältekreis 21 können dabei mittels einer Stromleitung 30 und einer Steckverbindung 9 mit einem Stecker und einem Gegenstecker mit dem externen Stromnetz 8 verbunden werden. Das externe Stromnetz 8 ist dabei insbesondere ein öffentliches Stromnetz eines Energieversorgungsunternehmens mit einer Spannung von beispielsweise 220 Volt. Mittels der elektrischen Energie aus dem externen Stromnetz 8 und durch die Stromleitung 30 können die beiden Temperierungseinrichtung 2 mit elektrischer Energie zum Temperieren des Fahrzeuginnenraumes 5 und/oder der Batterie 6 versorgt werden. Ferner wird aus dem externen Stromnetz 8 die Batterie 6 aufgeladen.

Vor einem Fahrtantritt mit dem Elektro- oder Hybridfahrzeug 3, 4 wird durch eine tragbare Fernsteuerung 10 oder einen Timer 11 an dem Elektro- oder Hybridfahrzeug 3, 4 ein bevorstehender Fahrtantritt eingegeben. Daneben ist es auch möglich, den bevorstehenden Fahrtantritt mittels eines Laptops 15 eines Blackberrys 14 oder eines Handys 13 als mobile tragbare Geräte 12 einzugeben. Das Elektro- oder Hybridfahrzeug 3, 4 weist hierzu eine Datenschnittstelle 29 auf. Mittels der Datenschnittstelle 29 können Daten drahtgebunden oder drahtlos, mittels Funk, übertragen werden. Beispielsweise tritt die Fernsteuerung 10 in Funkverbindung mit der Datenschnittstelle 29, so dass dadurch ein bevorstehender Fahrtantritt einer Steuerungseinrichtung 18 mit einem Computer 19 und einem Datenspeicher 20 mitgeteilt werden kann. Die Datenschnittstelle 29 kann dabei auch Daten beispielsweise aus dem Internet übertragen, so dass ein bevorstehender Fahrtantritt auch durch den Laptop 15 oder dem Handy 13 bzw. dem Blackberry 14 eingegeben werden kann, wobei das Handy 13 bzw. der Blackberry 14 eine Datenübertragung zum Internet ermöglicht. Ferner kann an einem Garagentüröffner 16 eine Einrichtung angeordnet sein, welche ein Öffnen der Garagentür an die Datenschnittstelle 29 meldet. Beim Öffnen der Garagentür 16 wird von der Steuerungseinheit 18 auf einen unmittelbar bevorstehenden Fahrtantritt mit dem Elektro- oder Hybridfahrzeug 3, 4 geschlossen.

Am oder im Fahrzeuginnenraum 5 ist ein Sensor 17 zur Erfassung einer Ist-Temperatur des Fahrzeuginnenraumes 5 und an der Batterie 6 ist auch ein Sensor 17 zur Erfassung der Ist-Temperatur der Batterie 6 vorhanden. Bei einem bevorstehenden bzw. ermittelten Fahrtantritt mit dem Elektrofahrzeug 3 oder dem Hybridfahrzeug 4 wird von der Steuerungseinrichtung 18 die Ist-Temperatur im Fahrzeuginnenraum 5 und die Ist-Temperatur der Batterie 6 mit der entsprechenden Soll-Temperatur verglichen. Die Soll-Temperatur kann mit einer Eingabeeinheit 33 eingegeben werden. Bei einer Abweichung der Ist-Temperatur von der Soll-Temperatur wird eine Temperierung des Fahrzeuginnenraumes 5 und der Batterie 6 durch die Temperierungseinrichtung 2 eingeleitet. Mittels eines nicht dargestellten Fluidkreislaufes wird von dem Verdampfer 22 dem Kondensator 24 und/oder der Heizeinrichtung 26 das Fluid des nicht dargestellten Fluidkreises erwärmt und durch einen Wärmetauscher 27 geleitet. Durch den Wärmetauscher 27 wird mittels eines Gebläses 28 Luft geblasen und diese durch den Wärmetauscher 27 temperierte Luft in den Fahrzeuginnenraum 5 oder zu den Batterien 6 geleitet. Die Batterien 6 sind dabei im Allgemeinen in einem nicht dargestellten Gehäuse angeordnet, so dass die Luft die Batterien 6 umströmen kann. Bei einer erforderlichen Temperierung einer Heckscheibe oder eines Fahrzeugsitzes kann die elektrische Heizeinrichtung 26 unmittelbar an der Heckscheibe oder an dem Fahrzeugsitz angeordnet sein, so dass zum Temperieren der Heckscheibe oder des Fahrzeugsitzes eine direkte Energieübertragung von der elektrischen Heizeinrichtung 26 möglich ist ohne die Zwischenschaltung mit einem nicht dargestellten Fluidkreislauf und einem nicht dargestellten Wärmetauscher 27.

In einem weiteren, nicht dargestellten Ausführungsbeispiel weist das Temperierungssystem 1 nur einen Kältekreis 21 auf. Der Fluidkreis, insbesondere ein Flüssigkeitskreis mit einer Umwälzpumpe, ist mit dem Verdampfer 22 und/oder dem Kondensator 24 und/oder der elektrischen Heizeinrichtung 26 thermisch koppelbar mittels nicht dargestellter Quellen-Wärmetauscher. Das Fluid des Fluidkreislaufes strömt außerdem durch die beiden Wärmetauscher 27 zum Temperieren des Fahrzeuginnenraumes 5 und der Batterie 6. Das Fluid nimmt damit an den Quellen-Wärmetauschern als Wärme- oder Kältequelle Wärme- oder Kälte auf und gibt diese mit den Wärmetauschern 27 ab. Mittels wenigstens einen Ventils kann gesteuert werden, ob nur der Fahrzeuginnenraum 5, nur die Batterie 6 oder sowohl der Fahrzeuginnenraum 5 und die Batterie 6 oder weder der Fahrzeuginnenraum 5 noch die Batterie 6 temperiert wird, indem mittels des wenigstens einen Ventils die Leitung des Fluidkreises entsprechend geöffnet oder geschlossen werden. Ferner kann mittels des wenigstens einen Ventils gesteuert werden, ob als Wärme- oder Kältequelle der Verdampfer 22 und/oder der Kondensator 24 und/oder die Heizeinrichtung genutzt wird.

Kurz nach Fahrtantritt mit dem Elektro- oder Hybridfahrzeug 3, 4 wird die elektrische Verbindung mittels der Steckverbindung 9 zu dem externen Stromnetz 8 abgetrennt, so dass die elektrische Energie zur Versorgung der Temperierungseinrichtungen 2 aus der Batterie 6 stammt. Dabei ist es im Allgemeinen zu Beginn der Fahrt mit dem Elektrofahrzeug 3 oder dem Hybridfahrzeug 4 nicht mehr erforderlich, dass der Fahrzeuginnenraum 5 oder die Batterie 6 temperiert wird, weil bereits eine Vortemperierung während der Verbindung mit dem externen Stromnetz 8 durchgeführt wurde.

Insgesamt betrachtet sind mit dem erfindungsgemäßen Temperierungssystem 1 wesentliche Vorteile verbunden. Die Temperierung des Fahrzeuginnenraumes 5 und der Batterie 6 erfolgt vor Fahrtantritt durch elektrische Energie aus dem externen Stromnetz 8. Dadurch kann elektrische Energie der Batterie 6 für die Temperierung am Beginn der Fahrt eingespart werden, so dass dadurch die Reichweite des Elektrofahrzeuges 3 und des Hybridfahrzeuges 4 erhöht wird. Außerdem wird dadurch der Komfort für die Fahrzeuginsassen erhöht, weil bereits vor Fahrtantritt mit dem Elektrofahrzeug 3 oder dem Hybridfahrzeug 4 eine angenehme Innenraumtemperatur im Fahrzeuginnenraum 5 im Bereich von 21°C vorherrscht.

## Patentansprüche

1. Verfahren zum Temperieren eines Fahrzeuginnenraumes (5) und/oder einer Batterie (6) eines Elektro- oder Hybridfahrzeug (3,4) mit den Schritten:
- Erfassen einer Ist-Temperatur des Fahrzeuginnenraumes (5) und/oder der Batterie (6),
- Vergleichen der Ist-Temperatur mit einer Soll-Temperatur des Fahrzeuginnenraumes (5) und/oder der Batterie (6),
- Temperieren des Fahrzeuginnenraumes (5) und/oder der Batterie (6) bei einer Abweichung der Ist-Temperatur von der Soll-Temperatur,
- der Fahrzeuginnenraum (5) und/oder die Batterie (6) vor Fahrantritt mittels elektrischer Energie aus einem externen Stromnetz (8) temperiert wird und die elektrische Energie zum Temperieren während des Temperierens dem externen Stromnetz (8) entzogen wird, wobei:
- ein bevorstehender Fahrtantritt mit dem Elektro- oder Hybridfahrzeug (3, 4) ermittelt wird und, vorzugsweise während einer vorgegebenen Zeitspanne, der Fahrzeuginnenraum (5) und/oder die Batterie (6) vor dem Fahrtantritt temperiert wird, **dadurch gekennzeichnet, dass**
- der bevorstehende Fahrtantritt aufgrund einer Temperierungsnutzungshistorie und/oder einer Nutzungshistorie des Elektro- oder Hybridfahrzeuges (3, 4) ermittelt wird.

2. Verfahren nach Anspruch 1, **dadurch gekennzeichnet, dass** der Fahrzeuginnenraum (5) und/oder die Batterie (6) vor Fahrantritt mittels elektrischer Energie ausschließlich aus dem externen Stromnetz (8) temperiert wird und/oder die, vorzugsweise elektrische, Energie zum Temperieren nicht in einem Energiespeicher (6), insbesondere einer Batterie (6), des Elektro- oder Hybridfahrzeuges (3, 4) gespeichert wurde.

3. Verfahren nach einem oder mehreren der Ansprüche 1 bis 2, **dadurch gekennzeichnet, dass** in die Ermittlung des bevorstehenden Fahrtantritts ein Koppelung mit Wetterinformationen einfließt.

4. Verfahren nach einem oder mehreren der Ansprüche 1 bis 3, **dadurch gekennzeichnet, dass** der bevorstehende Fahrtantritt mittels einer Koppelung mit einem Garagentüröffner (16) ermittelt wird.

5. Temperierungssystem (1) für einen Fahrzeuginnenraum (5) und/oder eine Batterie (6) eines Elektro- oder Hybridfahrzeuges (3, 4), umfassend:
- wenigstens einen Sensor (17) zur Erfassung einer Ist-Temperatur des Fahrzeuginnenraumes (5) und/oder der Batterie (6),
- eine Steuerungseinrichtung (18),
- wenigstens eine Temperierungseinrichtung (2) zur Temperierung des Fahrzeuginnenraumes (5) und/oder der Batterie (6),
**dadurch gekennzeichnet, dass** die Steuerungseinrichtung (18) ein Verfahren gemäß einem oder mehrerer der vorhergehenden
Ansprüche ausführt und einen Computer (19) und einen Datenspeicher (20) zur Speicherung der Nutzungshistorie umfasst.

6. Temperierungssystem nach Anspruch 5, **dadurch gekennzeichnet, dass** das Temperierungssystem (1) eine Datenschnittstelle (29) zur Übertragung von Daten bezüglich eines bevorstehenden Fahrtantritts umfasst.

## Claims

1. Method for controlling the temperature of a vehicle passenger compartment (5) and/or of a battery (6) of an electric or hybrid vehicle (3, 4) having the steps:
- detecting an actual temperature of the vehicle passenger compartment (5) and/or of the battery (6),
- comparing the actual temperature with a set point temperature of the vehicle passenger compartment (5) and/or of the battery (6),
- controlling the temperature of the vehicle passenger compartment (5) and/or of the battery (6) in the event of a deviation of the actual temperature from the set point temperature,
- the temperature of the vehicle passenger compartment (5) and/or of the battery (6) is controlled before the start of a journey by means of electrical energy from an external power system (8), and the electrical energy for controlling the temperature is drawn from the external power system (8) during the temperature control process, wherein
- an imminent start of a journey with the electric or hybrid vehicle (3, 4) is determined and, preferably during a predefined time period, the temperature of the vehicle passenger compartment (5) and/or of the battery (6) is controlled before the start of a journey, **characterized in that**
- the imminent start of a journey is determined on the basis of a temperature control use history and/or a use history of the electric or hybrid vehicle (3, 4).

2. Method according to Claim 1, **characterized in that** the temperature of the vehicle passenger compartment (5) and/or of the battery (6) is controlled before the start of a journey by means of electrical energy exclusively from the external power system (8), and/or the, preferably electrical, energy for the temperature control has not been stored in an energy storage unit (6), in particular a battery (6), of the electric or hybrid vehicle (3, 4).

3. Method according to one or more of Claims 1 to 2, **characterized in that** a connection with weather information is included in the determination of the imminent start of a journey.

4. Method according to one or more of Claims 1 to 3, **characterized in that** the imminent start of a journey is determined by means of a connection to a garage door opener (16).

5. Temperature control system (1) for a vehicle passenger compartment (5) and/or a battery (6) of an electric or hybrid vehicle (3, 4), comprising:
- at least one sensor (17) for detecting an actual temperature of the vehicle passenger compartment (5) and/or of the battery (6),
- a control device (18),
- at least one temperature control device (2) for controlling the temperature of the vehicle passenger compartment (5) and/or of the battery (6),
**characterized in that**
the control device (18) carries out a method according to one of more of the preceding claims and comprises a computer (19) and a data store (20) for storing the use history.

6. Temperature control system according to Claim 5, **characterized in that** the temperature control system (1) comprises a data interface (29) for transmitting data relating to an imminent start of a journey.

## Revendications

1. Procédé de conditionnement thermique d'un habitacle de véhicule (5) et/ou d'une batterie (6) d'un véhicule électrique ou hybride (3, 4) comportant les étapes suivantes :
- détecter une température instantanée de l'habitacle de véhicule (5) et/ou de la batterie (6),
- comparer la température instantanée à une température nominale de l'habitacle de véhicule (5) et/ou de la batterie (6),
- conditionner thermiquement l'habitacle de véhicule (5) et/ou la batterie (6) lors d'un écart de la température instantanée par rapport à la température nominale,
- l'habitacle de véhicule (5) et/ou la batterie (6) est conditionné thermiquement avant le départ au moyen d'énergie électrique provenant d'un réseau électrique externe (8) et, pendant le conditionnement thermique, l'énergie électrique destinée au conditionnement thermique est prélevée du réseau électrique externe (8), dans lequel
- un départ imminent du véhicule électrique ou hybride (3, 4) est déterminé et l'habitacle de véhicule (5) et/ou la batterie (6) est/sont conditionné(s) thermiquement avant le départ, de préférence pendant un intervalle de temps prédéterminé,
**caractérisé en ce que**
- le départ imminent est déterminé sur la base d'un historique d'utilisation du conditionnement thermique et/ou d'un historique d'utilisation du véhicule électrique ou hybride (3, 4).

2. Procédé selon la revendication 1, **caractérisé en ce que** l'habitacle de véhicule (5) et/ou la batterie (6) est conditionné thermiquement avant le départ au moyen d'énergie électrique provenant exclusivement du réseau électrique externe (8) et/ou **en ce que** l'énergie destinée au conditionnement thermique, de préférence électrique, n'a pas été accumulée dans un accumulateur d'énergie (6), en particulier une batterie (6), du véhicule électrique ou hybride (3, 4).

3. Procédé selon une ou plusieurs des revendications 1 à 2, **caractérisé en ce que**, lors de la détermination du départ imminent, un couplage avec des informations météorologiques est introduit.

4. Procédé selon une ou plusieurs des revendications 1 à 3, **caractérisé en ce que** le départ imminent est déterminé au moyen d'un couplage avec un dispositif d'ouverture de porte de garage (16).

5. Système de conditionnement thermique (1) destiné à un habitacle de véhicule (5) et/ou à une batterie (6) d'un véhicule électrique ou hybride (3, 4), comprenant :
- au moins un capteur (17) pour détecter une température instantanée de l'habitacle de véhicule (5) et/ou de la batterie (6),
- un dispositif de commande (18),
- au moins un dispositif de conditionnement thermique (2) destiné à conditionner thermiquement l'habitacle de véhicule (5) et/ou la batterie (6),
**caractérisé en ce que**
le dispositif de commande (18) met en oeuvre un procédé selon l'une quelconque des revendications précédentes et comprend un ordinateur (19) et une mémoire de données (20) pour stocker l'historique d'utilisation.

6. Système de conditionnement thermique selon la revendication 5, **caractérisé en ce que** le système de conditionnement thermique (1) comprend une interface de données (29) pour transmettre des données concernant un départ imminent.
